# DEMANDE DE BREVET EUROPEEN

(11) **EP 0 982 166 A1**
(43) Date de publication de la demande: **01.03.2000**
(21) Numéro de dépôt: 99402054.3
(22) Date de dépôt: 12.08.1999
(51) Int. Cl.: B60J 5/04

(54) **Ensemble comprenant un module standard de porte de véhicule utilisable indifféremment pour des véhicules deux portes ou quatre portes**

(30) Priorité: 21.08.1998 FR 9810637
(71) Demandeur: Meritor Light Vehicle Systems-France, 45600 Sully sur Loire (FR)
(72) Inventeur: Spurr, Nigel, V., Hall Green, Birmingham B28 0RP (GB); Arquevaux, Laurent, 45600 Sully sur Loire (FR); Delire, Philippe, 72170 Beaumont sur Sarthe (FR)
(74) Mandataire: Martin, Jean-Paul

(57) **Abrégé**

Ensemble comprenant un module (15) de porte de véhicule équipé d'une serrure (11, 12) et de moyens de fixation de celle-ci à un panneau support constitutif du module, lequel est conformé pour s'appliquer sur le pourtour d'une ouverture (10) ménagée dans un panneau intérieur d'un cadre de porte (5), caractérisé en ce que le panneau support (15) est identique pour un véhicule à deux portes (2) et pour un véhicule à quatre portes (1), et cet ensemble comprend des pattes (16, 17 ; 24) de fixation de la serrure au panneau différentes pour les deux types de véhicule, à savoir une première patte (19) de longueur adaptée à un véhicule à deux portes et une seconde patte (16) plus courte que la première, adaptée à un véhicule à quatre portes. Cet agencement permet d'utiliser le même module standard pour des véhicules de types différents et donc de diminuer les investissements correspondants pour la réalisation du module.

## Description

La présente invention a pour objet un ensemble comprenant un module de porte de véhicule équipé d'une serrure, et des moyens de fixation de celle-ci à un panneau support constitutif du module. Ce dernier est conformé pour pouvoir s'appliquer sur le pourtour d'une ouverture ménagée dans un panneau intérieur d'un cadre de la porte du véhicule.

L'invention a aussi pour objet un procédé d'assemblage d'un module de porte à un cadre de porte de véhicule automobile du type à deux portes ou à quatre portes.

Ces modules de porte s'appliquent sur le pourtour de l'ouverture du cadre de manière étanche, et sont munis d'équipements fonctionnels tels que lève-vitre, serrure etc. Le module est constitué d'un panneau en tôle de support des équipements, muni d'un joint périmétrique qui vient fermer l'ouverture de la porte, cette ouverture servant à passer à l'intérieur de la porte les équipements que supporte le panneau de tôle. Conventionnellement, le panneau support du module est spécifique pour chaque modèle de véhicule: ainsi il est différent pour un véhicule à deux portes et pour un véhicule à quatre portes, le panneau support étant plus long pour un véhicule à quatre portes. Il en résulte des investissements importants d'emboutissage de la tôle support du module, puisqu'il faut un module spécifique à chaque type de véhicule.

L'invention a pour but de proposer la réalisation d'un module standard, pouvant être utilisé indifféremment pour des véhicules à deux portes et pour des véhicules à quatre portes.

Conformément à l'invention, l'ensemble module de porte et ses moyens de fixation d'une serrure comporte un panneau support identique pour un véhicule à deux portes et pour un véhicule à quatre portes, ainsi que des pattes de fixation de la serrure au panneau différentes pour les deux types de véhicules, à savoir une première patte de longueur adaptée à un véhicule à deux portes et une seconde patte plus courte que la première, adaptée à un véhicule à quatre portes.

Selon le procédé également visé par l'invention, on utilise un module identique pour les deux types de véhicule ainsi que des moyens de fixation de la serrure au module spécifiques à chaque type de véhicule.

De ce fait, le même module peut être utilisé de manière standard pour les deux types de véhicule, en remplaçant simplement la patte courte par une patte plus longue de fixation de la serrure lorsqu'on passe d'un véhicule quatre portes à un véhicule deux portes.

Suivant un mode de réalisation avantageux de l'invention, dans le panneau support du module sont formées des zones embouties sur lesquelles peuvent être fixés des rails de guidage d'un lève-vitre, la position longitudinale de la fixation de chaque rail étant réglable dans chaque zone emboutie selon que le lève-vitre équipe un véhicule deux portes ou quatre portes ; chaque zone emboutie présente ainsi des points de fixation décalés longitudinalement pour les deux types de véhicules.

Le même module standard peut donc être utilisé très aisément pour l'un quelconque des deux types de véhicule, ce qui nécessite seulement de choisir dans la zone emboutie du panneau support les points de fixation spécifiques au type de véhicule en cours d'assemblage.

D'autres particularités et avantages de l'invention apparaîtront au cours de la description qui va suivre, faite en référence aux dessins annexés qui en illustrent deux formes de réalisation à titre d'exemples non limitatifs.

La figure 1 est une vue en élévation schématique du côté intérieur d'une porte de véhicule automobile, illustrant l'art antérieur à la présente invention.

La figure 2 est une vue en élévation schématique analogue à la figure 1 illustrant une première forme de réalisation de l'ensemble de module de porte selon l'invention.

La figure 3 est une vue en coupe partielle à échelle agrandie suivant 3/3 de la figure 2.

La figure 4 est une vue en élévation d'une porte de véhicule et d'un module standard correspondant, selon une seconde forme de réalisation de l'invention.

La figure 5 est une vue en coupe suivant 5-5 de la figure 4, montrant la première phase d'une opération d'introduction de la serrure équipant le module à l'intérieur du cadre de porte.

La figure 6 est une vue analogue à la figure 5 montrant le module standard et la serrure assemblés au cadre de porte.

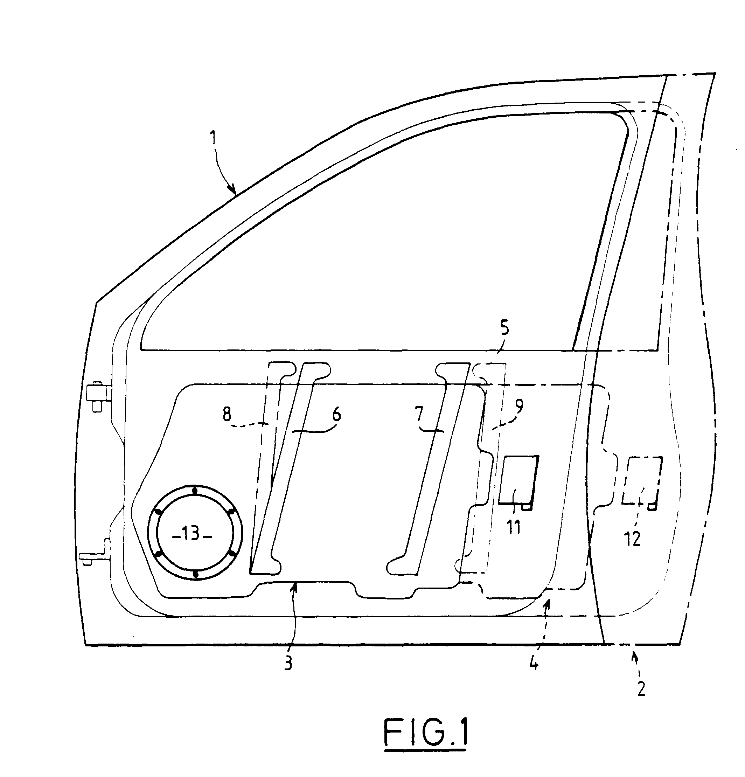

On voit à la figure 1 une porte 1 représentée en trait continu, d'un véhicule à quatre portes, et une porte 2 illustrée partiellement en trait mixte, appartenant à un véhicule à deux portes, l'arrière du véhicule n'étant pas représenté.

La différence entre les portes 1 et 2 se situe essentiellement à l'arrière, la porte 2 étant nécessairement plus longue que la porte 1. Corrélativement, selon l'art antérieur, chaque porte 1 et 2 est équipée d'un module respectif 3, 4 dont le contour est adapté à celui d'une ouverture correspondante d'un panneau intérieur 5 du cadre de la porte 1 ou 2.

L'ouverture d'une porte de véhicule à deux portes 2 étant plus longue que celle d'une porte 1 de véhicule à quatre portes, le panneau 4 est donc nettement plus long que le panneau 3 de véhicule à quatre portes. Sur chacun d'eux les emplacements des rails de guidage respectifs 6, 7 (module 3) et 8, 9 (module 4) sont différents (si le mécanisme du lève-vitre est du type à deux rails de guidage). Chaque module 3, 4 est également muni, sur son côté arrière, d'un moyen de fixation d'une serrure respective 11, 12, et le cas échéant pourvu d'autres équipements fonctionnels tel qu'un haut parleur 13.

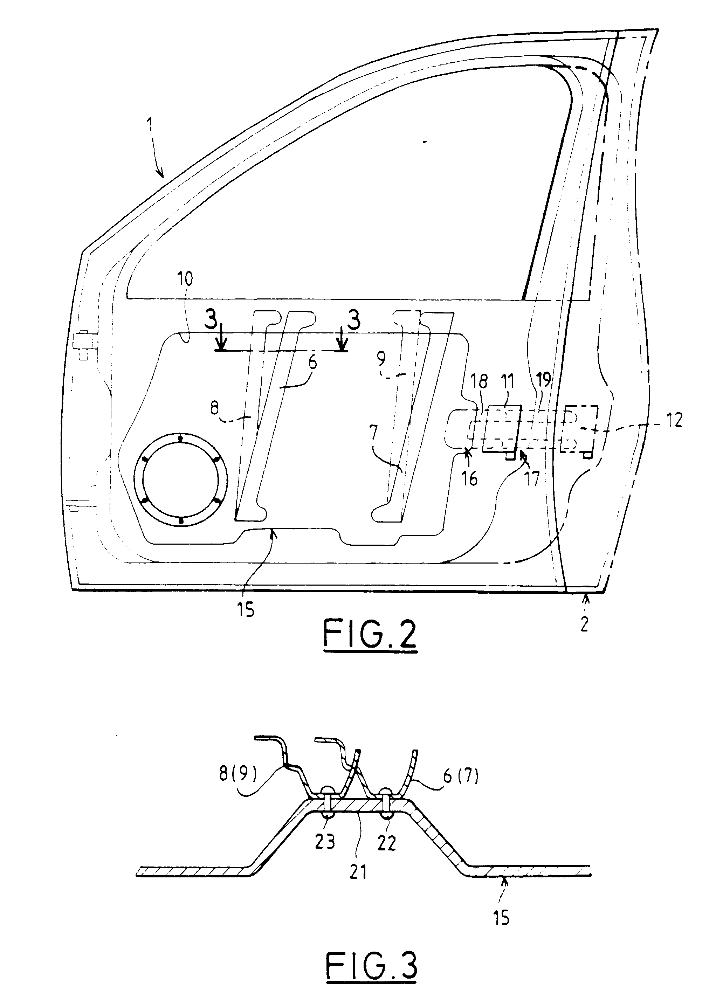

Dans le premier mode de réalisation de l'ensemble visé par l'invention (figure 2), cet ensemble comprend un module de porte standard 15, pouvant servir indifféremment pour la porte 1 d'un véhicule à quatre portes et pour la porte 2 d'un véhicule à deux portes. Bien entendu l'ouverture 10 du cadre de porte 5 sur le pourtour de laquelle est. appliqué le module 15 est identique pour les deux types de porte 1 et 2. Le module 15 comprend un panneau support en tôle similaire au panneau constitutif du module 3.

Le panneau standard 15 est complété, soit par une patte latérale 16 de fixation de la serrure 11 de courte longueur pour un véhicule à quatre portes, soit par une patte 17 de longueur nettement supérieure à celle de la patte 16 pour une porte 2 d'un véhicule à deux portes. Comme schématiquement représenté, les pattes 16, 17 peuvent présenter un profil général en U dont la partie centrale vient se fixer par tout moyen approprié sur le côté arrière du module standard 15, tandis que les branches respectives 18 ou 19 sont solidarisées par tout moyen adapté avec la serrure correspondante 11 ou 12.

Par ailleurs, dans le panneau support 15 sont formées des zones embouties telles que la zone 21, sur lesquelles peuvent être fixés les rails respectifs de guidage du lève-vitre (s'il s'agit d'un lève-vitre de ce type). Sur chaque rail avant 6 ou 8, et à chaque rail arrière 7 ou 9, est ainsi ménagée au moins une zone emboutie telle que 21, et le cas échéant deux zones superposées à une distance appropriée.

Dans chaque zone emboutie 21, la position longitudinale de la fixation de chaque rail 6 ou 8 (ou 7 ou 9) est réglable selon que le lève-vitre équipe un véhicule deux portes ou quatre portes. Chaque zone emboutie telle que 21 présente à cet effet deux points de fixation décalés longitudinalement pour les deux types de véhicules.

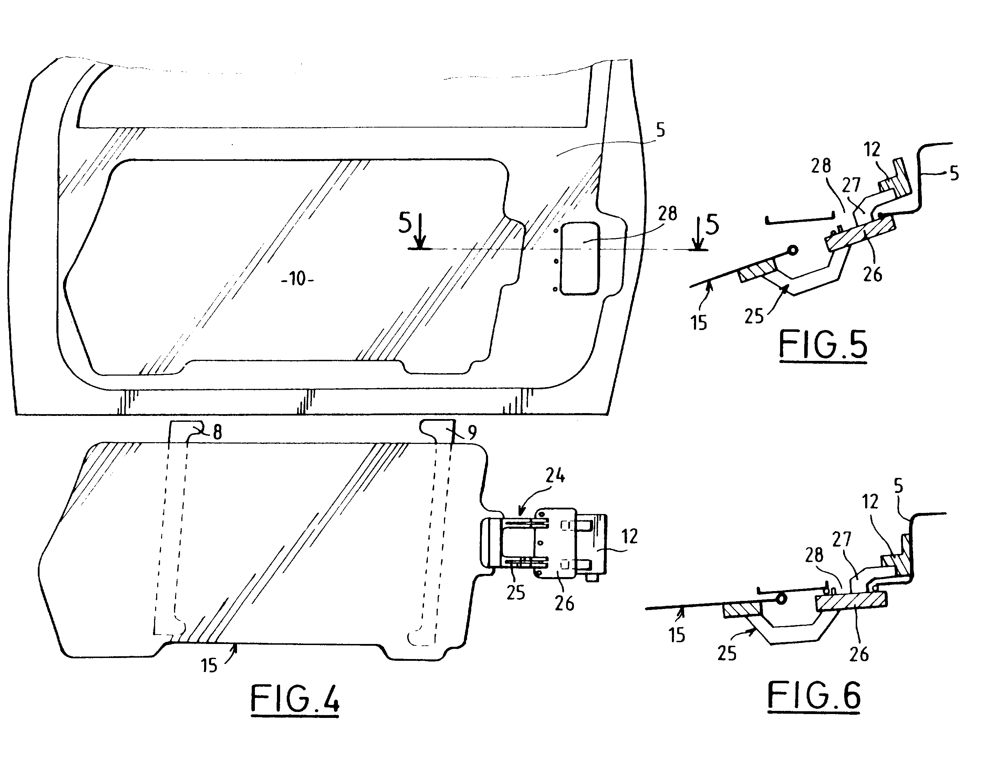

Ces points sont matérialisés dans l'exemple illustré à la figure 3 par des rivets 22, 23 de fixation respectivement du rail 6 (ou 7) et du rail 8 (ou 9), le rail 6 étant sensiblement en arrière du rail 8 et plus incliné sur la verticale. Par contre le rail arrière 9 d'un véhicule à deux portes est moins incliné sur la verticale que le rail 7 d'un véhicule quatre portes, et un peu plus décalé vers l'avant.

Bien entendu les rivets 22, 23 peuvent être remplacés par tout autre moyen de fixation approprié.

Dans la seconde réalisation illustrée aux figures 4 à 6, le module 15 est complété par un système de patte 24 de support de la serrure 12 spécifiquement adapté à un véhicule deux portes. En effet dans ce cas la patte constituant le dispositif 24 est constituée d'une première partie 25 formant une patte de profil en U, et d'une plaque 26 pouvant être fixée aux extrémités des branches de la patte 25 par tout moyen approprié non représenté, par exemple vis, boulon, clip ...

La serrure 12 peut être fixée par un élément 27 à la plaque 26 du côté opposé à la patte 25, afin de permettre d'introduire la serrure 12 dans une lumière 28 du cadre de porte 5, la patte 25 ayant été préalablement fixée au panneau standard 15. Une fois cette opération effectuée, il suffit de rabattre l'ensemble du panneau 15 sur le contour de l'ouverture 10 du cadre de porte 5 (figure 6).

L'agencement du système de fixation 24 avec la patte 25 et la plaque 26 facilite l'assemblage du module 15 au cadre de porte 5 si la patte support est exagérément longue, comme cela peut être le cas avec certains véhicules deux portes.

Le système de fixation 24 n'est pas justifié ni utilisable pour un véhicule quatre portes, auquel cas il est démonté et remplacé par une patte telle que 16.

## Revendications

1. Ensemble comprenant un module (15) de porte de véhicule équipé d'une serrure (11, 13) et de moyens de fixation de celle-ci à un panneau support constitutif du module, lequel est conformé pour s'appliquer sur le pourtour d'une ouverture (10) ménagée dans un panneau intérieur d'un cadre de porte (5), caractérisé en ce que le panneau support (15) est identique pour un véhicule à deux portes (2) et pour un véhicule à quatre portes (1), et cet ensemble comprend des pattes (16, 17; 24) de fixation de la serrure au panneau différentes pour les deux types de véhicule, à savoir une première patte (19; 24) de longueur adaptée à un véhicule à deux portes et une seconde patte (16) plus courte que la première, adaptée à un véhicule à quatre portes.

2. Ensemble selon la revendication 1, destiné à un véhicule à deux portes, caractérisé en ce que ladite première patte (24) est constituée d'une première partie (25) de longueur voisine de celle d'une patte (16) destinée à un véhicule à quatre portes, et d'une plaque (26) fixée à l'extrémité de ladite première partie , la serrure (12) pouvant être montée sur cette plaque, qui est conformée pour pouvoir boucher une lumière (28) correspondante dans le cadre de porte (5), par laquelle la serrure peut être introduite.

3. Ensemble selon l'une des revendications 1 et 2, caractérisé en ce que dans le panneau support (15) du module sont formées des zones embouties (21) sur lesquelles peuvent être fixés des rails (6, 7 ; 8, 9) de guidage d'un lève-vitre, au moins une zone emboutie (21) étant prévue pour chaque rail, et la position longitudinale de la fixation de chaque rail est réglable dans chaque zone emboutie selon que le lève-vitre équipe un véhicule deux portes ou quatre portes, chaque zone emboutie présentant ainsi des points de fixations (22, 23) décalés longitudinalement pour les deux types de véhicule.

4. Procédé d'assemblage d'un module de porte (15) à un cadre de porte (5) de véhicule automobile du type à deux portes ou à quatre portes, le module faisant partie d'un ensemble conforme à l'une quelconque des revendications 1 à 3, caractérisé en ce qu'on utilise un module (15) identique pour les deux types de véhicule ainsi que des moyens (16 ou 17 ou 24) de fixation de la serrure (11 ou 12) au module spécifiques à chaque type de véhicule.
